# FASCICULE DE BREVET EUROPEEN

(11) **EP 1 549 490 B1**
(45) Date de publication et mention de la délivrance du brevet: **01.10.2014**
(21) Numéro de dépôt: 03755052.2
(22) Date de dépôt: 07.05.2003
(51) Int. Cl.: B32B 17/10, B60J 3/00, B32B 27/36

(54) **VITRE FEUILLETTE AVEC UN FILM CONTRECOLLE**
VERBUNDGLASSCHEIBE MIT EINLAMINIERTEM POLYMERFILM
LAMINATED GLASS SHEET WITH A LAMINATED FILM

(30) Priorité: 07.05.2002 DE 10220299
(43) Date de publication de la demande: 06.07.2005
(73) Titulaire: SAINT-GOBAIN GLASS FRANCE, 92400 Courbevoie (FR)
(72) Inventeur: OFFERMANN, Volkmar, D-52249 Eschweiler (DE); GOERENZ, Walter, D-52477 Alsdorf (DE); LINDEN, Ludwig, D-52080 Aachen (DE); STEFFENS, Michael, D-52224 Stolberg (DE); SCHILDE, Heinz, D-52146 Würselen (DE)
(74) Mandataire: Colombier, Christian
(86) Numéro de dépôt international: PCT/FR2003/001418
(87) Numéro de publication internationale: WO 2003/099553

(56) Documents cités:
- EP-A- 0 287 861
- GB-A- 590 235
- GB-A- 857 174
- GB-A- 1 470 844
- US-A- 3 630 809

## Description

L'invention se rapporte à une vitre feuilletée avec un film contrecollé, avec les caractéristiques du préambule de la revendication 1.

On connaît des vitres feuilletées prévues pour le montage dans des toits coulissants-pivotants de véhicules ou aussi pour des vitres latérales arrière ou des lunettes arrière de véhicules, qui se composent essentiellement de deux vitres rigides en verre ou en matière plastique et de films adhésifs assemblant par collage ces deux vitres rigides l'une à l'autre. Pour absorber une partie de la lumière pénétrant par la vitre feuilletée à l'état monté, on utilise souvent un film adhésif teinté dans la masse. Par combinaison avec un film adhésif non coloré, clairement transparent par lui-même à l'état terminé, on améliore le comportement acoustique (insonorisation) ainsi que la résistance aux UV du feuilleté terminé. Pour ce dernier effet, le film adhésif non coloré est, lorsque la vitre feuilletée est montée, tourné vers le rayonnement lumineux, respectivement solaire (vers l'extérieur). Il absorbe une grande partie du rayonnement UV, qui pourrait à long terme modifier la coloration du film adhésif teinté.

Lors de la liaison définitive des couches de cette vitre feuilletée par un passage à l'autoclave à environ 130 à 150°C, les deux films adhésifs fondent presqu'entièrement. La vitre feuilletée terminée présente cependant parfois, par transparence, une coloration nuageuse hétérogène clairement perceptible. On a constaté que, par suite des surfaces rugueuses et ondulées des films à l'interface entre les films adhésifs clairs et colorés, il se produit dans l'autoclave des phénomènes d'écoulement irrégulier et par conséquent des fluctuations de l'épaisseur des films, d'une épaisseur sensiblement régulière avant la fusion, notamment indépendamment du fait que les deux films appliqués l'un sur l'autre présentaient initialement des épaisseurs égales ou différentes.

La rugosité et l'ondulation des surfaces des films sont d'une part inévitables en production, et d'autre part elles contribuent à une élimination fiable de l'air de l'ébauche du feuilleté lors de l'application d'une dépression. L'air emprisonné entre les couches doit, de façon connue, être éliminé et il s'échappe en l'espèce par les canaux formés par les structures des surfaces.

On connaît aussi des vitres feuilletées dans lesquelles on insère entre deux films adhésifs, pour une isolation thermique accrue, un film thermoplastique additionnel, la plupart du temps en PET (polyéthylène-téréphtalate), qui est à son tour pourvu d'un revêtement (contenant du métal) réfléchissant les radiations infrarouges. Pour la même fonction, on peut aussi utiliser un film sans composant métallique constitué de PET-PMMA coextrudé ou contrecollé (connu sous le nom commercial SRF 3M® "solar reflecting film = film réfléchissant solaire").

Dans ces films contrecollés - avec des films adhésifs de même teinte - le problème d'une coloration différente et du mélange des films adhésifs ne se pose naturellement pas.

L'invention a pour objet de perfectionner une vitre feuilletée de cette nature avec un film contrecollé à partir de films adhésifs différemment teintés, de façon à éviter des perturbations optiques causées par des fluctuations d'épaisseur lors de la fusion.

Conformément à l'invention, cet objectif est atteint par les caractéristiques de la revendication 1. Les caractéristiques des revendications secondaires présentent des perfectionnements avantageux de cet objet.

On peut éviter avec certitude les effets optiques indésirables en plaçant entre le film adhésif teinté et le film adhésif clair au moins une couche intermédiaire additionnelle, qui ne modifie pas sa surface au cours du traitement à l'autoclave, et qui conserve sensiblement sa forme spatiale acquise ultérieurement après la jonction des couches du feuilleté. Les surfaces des films adhésifs voisins sont ainsi aplanies uniformément lors de la fusion et ne peuvent former aucune ondulation visuellement perceptible.

Comme couche intermédiaire, on utilise par exemple un film clair de PET, un film de PET revêtu, par exemple du type Southwall XIR, un film coextrudé en PET-PMMA, par exemple du type SRF 3M®, mais on pourrait aussi utiliser de nombreux autres films (par exemple en PC, PE, PEN, PMMA, PVC), qui sont visuellement aussi transparents que possible et ne se modifient pas dans l'autoclave en ce qui concerne leur surface et leur consistance.

Une autre exigence essentielle est naturellement que les films utilisés comme couche intermédiaire soient compatibles avec les films adhésifs voisins. Il doit en particulier exister une bonne adhérence entre les films adhésifs et la couche intermédiaire, pour ne pas devoir craindre de décollement des couches. De même, il ne doit apparaître aucune interaction chimique ou physique, qui pourrait conduire à des perturbations optiques ou mécaniques pendant la durée de vie de la vitre feuilletée.

On pourrait aussi insérer une autre vitre rigide comme couche intermédiaire, de préférence mais pas exclusivement une vitre extrêmement mince en verre ou en matière plastique (par exemple en polycarbonate), qui peut éventuellement s'adapter sans préformage même à une légère courbure des deux vitres rigides de la vitre feuilletée. Si la vitre feuilletée est plane et/ou si son épaisseur totale et son poids ont moins d'importance, alors une vitre rigide d'épaisseur normale (quelques millimètres) en verre ou en matière plastique peut former la couche intermédiaire. A l'aide de cette couche intermédiaire noyée dans le film contrecollé, on forme dans chaque cas une couche ou paroi de séparation, qui empêche ce processus d'écoulement irrégulier indésirable entre les deux films adhésifs différents même lorsque ceux-ci sont entièrement fondus. Les vitres feuilletées ainsi fabriquées sont teintées de façon très homogène en vision par transparence.

Selon une autre variante de l'invention, on peut aussi obtenir une coloration supplémentaire du produit fini, en vision par transparence, par une coloration adéquate de la couche intermédiaire elle-même. Une couche intermédiaire teintée peut, en addition à la coloration d'un premier film adhésif à haute flexibilité et reproductibilité même dans une série de vitres feuilletées de même configuration, apporter des teintes différentes, par exemple pour compléter l'adaptation à des coloris environnants (laque de carrosserie, équipement intérieur dans un véhicule), la teinte de base du film adhésif et la teinte additionnelle de la couche intermédiaire devant naturellement être soigneusement harmonisées l'une avec l'autre.

Exemple de réalisation:
Pour la réalisation de l'invention, on amène deux vitres rigides à la forme désirée, de la façon usuelle (périmètre et éventuellement contour cintré). On découpe le film adhésif teinté et le film adhésif non teinté de façon appropriée et on insère entre ceux-ci un mince film de PET.
On pose ensuite la pile de films sur une des vitres rigides et on le recouvre avec la seconde vitre rigide. En règle générale, on découpera des surfaces de films un peu plus petites que les surfaces des vitres rigides. Ces dernières peuvent être toutes deux en verre ou en matière plastique,
ou on utilise une vitre en verre et une vitre en matière plastique.

Après avoir éliminé l'air de la pile de vitres et de films à l'aide de dispositifs adéquats, l'ébauche feuilletée est soumise à un traitement par la chaleur et la pression dans un autoclave. En l'occurrence, les films adhésifs sont complètement fondus et ils se lient intimement par collage aux faces respectivement voisines des vitres rigides ou de la couche intermédiaire.

De façon connue en soi, on obturera avec des moyens appropriés la fente périphérique entre les deux vitres rigides dans le plan du film contrecollé, afin d'éviter des décollements partant de ces endroits.

En variante, on peut aussi réaliser le film contrecollé par préfabrication, au lieu de le poser avant l'assemblage, au cours de laquelle ou bien un des films adhésifs est préalablement collé à la couche intermédiaire, de sorte qu'il ne faut plus poser que le second film adhésif, ou bien les trois couches de film sont déjà réunies et doivent encore uniquement être découpées pour s'adapter aux vitres rigides.

De telles ébauches contrecollées sont surtout employées lorsque la couche intermédiaire se présente sous la forme d'un film de PET revêtu, dans lequel la face principale revêtue est déjà recouverte d'un film adhésif peu de temps après le revêtement, afin de prévenir tout dommage de la couche multiple sensible, respectivement de l'ensemble des couches.

Après avoir obtenu le vitrage feuilleté muni de la couche ou feuille intermédiaire séparant les deux différentes couches ou feuilles adhésives, on peut procéder au montage dudit vitrage dans une baie de fenêtre d'une carrosserie automobile ou bien d'un bâtiment selon l'utilisation préférée du vitrage selon l'invention.

Afin d'éviter que la couche ou feuille adhésive teintée ne soit dégradée par le rayonnement solaire on montera le vitrage dans ladite baie en posant la couche ou feuille adhésive non teintée vers la lumière incidente. Elle pourra absorber alors la plupart du rayonnement nocif sans en être dégradée (perdre de la couleur) elle-même. On comprend que ladite feuille ou couche teintée doit être posée, pendant la fabrication du feuilleté, du côté du vitrage feuilleté qui va former le côté intérieur, non exposé aux rayonnements, ce qui est particulièrement important dans le cas de vitrages bombés.

## Revendications

1. Vitre feuilletée avec un film contrecollé assemblant l'une à l'autre par collage deux vitres rigides en une vitre feuilletée, film qui comprend au moins un film adhésif teinté et un film adhésif non teinté pouvant fondre lors de la fabrication de la vitre feuilletée, dans laquelle il est prévu entre les deux films adhésifs différemment teintés pouvant fondre au moins une couche intermédiaire, qui provoque une égalisation uniforme des surfaces opposées l'une à l'autre des deux films adhésifs pendant la fusion, **caractérisée en ce que** la couche intermédiaire est choisie parmi un film de PET d'une épaisseur comprise entre 10 et 100 µm et un film sans métal du type SRF 3M® réfléchissant les radiations infrarouges.

2. Vitre feuilletée suivant la revendication 1, **caractérisée en ce que** la valeur de la transmission de la lumière visible du film teinté dans le produit fini se situe entre 1 et 85 %.

3. Vitre feuilletée suivant l'une quelconque des revendications précédentes, **caractérisée en ce que** les deux films adhésifs ont chacun une épaisseur comprise entre 0,2 et 1,1 mm, de préférence entre 0,38 et 0,76 mm.

4. Vitre feuilletée suivant la revendication 3, **caractérisée en ce qu'**au moins un des films adhésifs se compose de polyvinyl butyral.

5. Vitre feuilletée suivant la revendication 3, **caractérisée en ce qu'**au moins un des films adhésifs se compose d'un thermoplastique sans plastifiant, en particulier d'éthylène acétate de vinyle (EVA).

6. Vitre feuilletée suivant la revendication 3, **caractérisée en ce qu'**au moins un des films adhésifs se compose de polyméthylméthacrylate (PMMA).

7. Vitre feuilletée suivant l'une quelconque des revendications précédentes, **caractérisée en ce que** la couche intermédiaire est elle-même teintée.

8. Vitre feuilletée suivant la revendication 7, **caractérisée en ce que** la teinte de la couche intermédiaire additive à la teinte de la couche adhésive teintée donne une teinte transparente modifiée par rapport à la coloration du film adhésif uniquement.

## Patentansprüche

1. Verbundglasscheibe mit einem einlaminierten Film, der zwei starre Glasscheiben durch Kleben zu einer Verbundglasscheibe zusammenfügt, wobei der Film mindestens einen getönten Klebefilm und einen nicht getönten Klebefilm umfasst, die bei der Herstellung der Verbundglasscheibe schmelzen können, wobei zwischen den zwei unterschiedlich getönten Klebefilmen, die schmelzen können, mindestens eine Zwischenschicht vorgesehen ist, die eine gleichförmige Angleichung der einander gegenüberliegenden Flächen der zwei Klebefilme während des Schmelzens bewirkt, **dadurch gekennzeichnet, dass** die Zwischenschicht unter einem PET-Film mit einer Dicke, die im Bereich zwischen 10 und 100 µm liegt, und einem Film ohne Metall des Typs SRF 3M®, der Infrarotstrahlungen reflektiert, ausgewählt ist.

2. Verbundglasscheibe nach Anspruch 1, **dadurch gekennzeichnet, dass** der Wert der Durchlässigkeit des getönten Films für sichtbares Licht im Endprodukt zwischen 1 und 85 % liegt.

3. Verbundglasscheibe nach einem der vorhergehenden Ansprüche, **dadurch gekennzeichnet, dass** die zwei Klebefilme jeweils eine Dicke aufweisen, die im Bereich zwischen 0,2 und 1,1 mm, vorzugsweise zwischen 0,38 und 0,76 mm, liegt.

4. Verbundglasscheibe nach Anspruch 3, **dadurch gekennzeichnet, dass** mindestens einer der Klebefilme aus Polyvinylbutyral besteht.

5. Verbundglasscheibe nach Anspruch 3, **dadurch gekennzeichnet, dass** mindestens einer der Klebefilme aus einem Thermoplast ohne Weichmacher, insbesondere aus Ethylenvinylacetat (EVA), besteht.

6. Verbundglasscheibe nach Anspruch 3, **dadurch gekennzeichnet, dass** mindestens einer der Klebefilme aus Polymethylmethacrylat (PMMA) besteht.

7. Verbundglasscheibe nach einem der vorhergehenden Ansprüche, **dadurch gekennzeichnet, dass** die Zwischenschicht selbst getönt ist.

8. Verbundglasscheibe nach Anspruch 7, **dadurch gekennzeichnet, dass** die Tönung der Zwischenschicht zusätzlich zu der Tönung der getönten Klebeschicht eine in Bezug auf die Färbung lediglich des Klebefilms geänderte transparente Tönung ergibt.

## Claims

1. Composite pane having a film laminate which adhesively connects two rigid panes to one another to form a laminated pane, which film comprises at least one coloured adhesive film and at least one uncoloured adhesive film which can be fused on during production of the laminated pane, in which pane at least one intermediate layer is provided between the two differently coloured fused-on adhesive films and results in a uniform flattening of the mutually facing surfaces of the two adhesive films while being fused on, **characterized in that** the intermediate layer is chosen from a PET film with a thickness between 10 and 100µm and a metal-free film of 3M^{®}SRF type that reflects infrared radiation.

2. Composite pane according to Claim 1, **characterized in that** the value of the transmission of the visible light of the coloured adhesive film in the finished product is between 1 and 85%.

3. Composite pane according to either of the preceding claims, **characterized in that** the two adhesive films each have a thickness of between 0.2 and 1.1 mm, preferably between 0.38 and 0.76 mm.

4. Composite pane according to Claim 3, **characterized in that** at least one of the adhesive films is composed of polyvinyl butyral.

5. Composite pane according to Claim 3, **characterized in that** at least one of the adhesive films is composed of a thermoplastic without any plasticizer, in particular ethylene-vinyl acetate (EVA).

6. Composite pane according to Claim 3, **characterized in that** at least one of the adhesive films is composed of polymethyl methacrylate (PMMA).

7. Composite pane according to one of the preceding claims, **characterized in that** the intermediate layer is itself coloured.

8. Composite pane according to Claim 7, **characterized in that** the colour tone of the intermediate layer, together with the colour tone of the coloured adhesive layer results in a transparent colour which is modified with respect to the colour of the adhesive film alone.
